(19) Europäisches Patentamt
European Patent Office
Office européen des brevets

(11) Veröffentlichungsnummer : **0 268 175 B2**

# (12) NEUE EUROPÄISCHE PATENTSCHRIFT

(45) Veröffentlichungstag der neuen Patentschrift : **29.09.93 Patentblatt 93/39**

(51) Int. Cl.$^5$ : **C08K 5/09**, C08G 18/65, B29C 33/60

(21) Anmeldenummer : **87116499.2**

(22) Anmeldetag : **09.11.87**

## (54) Trennmittelkomposition, diese Trennmittelkomposition enthaltende Gemische und ein Verfahren zur Herstellung von elastischen Formkörpern.

(30) Priorität : **20.11.86 DE 3639502**

(43) Veröffentlichungstag der Anmeldung : **25.05.88 Patentblatt 88/21**

(45) Bekanntmachung des Hinweises auf die Patenterteilung : **02.01.91 Patentblatt 91/01**

(45) Bekanntmachung des Hinweises auf die Entscheidung über den Einspruch : **29.09.93 Patentblatt 93/39**

(84) Benannte Vertragsstaaten : **AT BE CH DE ES FR GB IT LI NL SE**

(56) Entgegenhaltungen :
**EP-A- 0 119 471**
**EP-A- 0 218 175**
**EP-A- 0 240 715**
**WO-A-86/01215**

(73) Patentinhaber : **BAYER AG**
**D-51368 Leverkusen (DE)**

(72) Erfinder : **Haas, Peter, Dr.**
**Zwengenberger Strasse 43**
**D-5657 Haan 1 (DE)**
Erfinder : **Weber, Christian, Dr.**
**Paul-Klee-Strasse 68a**
**D-5090 Leverkusen 1 (DE)**

EP 0 268 175 B2

## Beschreibung

Die vorliegende Erfindung betrifft eine neue Trennmittelkomposition zur Herstellung von Formkörpern auf Polyurethan- oder Polyhamstoffbasis mit selbsttrennenden Eigenschaften, ein diese Komposition enthaltendes Gemisch von Verbindungen mit gegenüber Isocyanatgruppen reaktionsfähigen Gruppen, ein Verfahren zur Herstellung von elastischen Formkörpem mit einer geschlossenen Oberflächenschicht unter Verwendung dieser Gemische und die nach diesem Verfahren erhaltenen Formkörper.

Die Herstellung von elastischen Formkörpern auf Basis von Polyurethanen oder von Polyharnstoffen durch Umsetzung in geschlossenen Formen von Reaktionsgemischen aus einer Polyisocyanatkomponente, höhermolekularen Verbindungen mit gegenüber Isocyanatgruppen reaktionsfähigen Gruppen, niedermolekularen Kettenverlängerungsmitteln und den üblichen Hilfs- und Zusatzmitteln ist beispielsweise aus DE-AS 2 622 951 oder EP-B-0081 701 bekannt. Bei diesen Verfahren des Standes der Technik werden die besagten Reaktionsgemische im allgemeinen nach dem Prinzip der Reaktionsspritzgußtechnik hergestellt und unmittelbar nach ihrer Herstellung in die jeweilige Form eingetragen. Nach einer im allgemeinen sehr kurzen Formstandzeit werden die resultierenden Formkörper entformt. Für die praktische Durchführbarkeit dieses Verfahrens, insbesondere für eine großtechnische Serienproduktion der entsprechenden Formteile, spielt die leichte Entformbarkeit der Formkörper eine ausschlaggebende Rolle. In diesem Zusammenhang spielt neben der Verwendung von äußeren Trennmitteln", d. h. von Trennmittelkompositionen, mit denen die Form vor Befüllen beschichtet wird, die Verwendung von sogenannten "inneren Formtrennmitteln" eine ausschlaggebende Rolle. "Innere Formtrennmittel" sind Substanzen, die dem Reaktionsgemisch einverleibt werden und zur Folge haben, daß die resultierenden Formkörper eine geringere Haftung an der Formoberfläche aufweisen, als dies ohne Verwendung derartiger Trennmittel der Fall wäre. Für die Herstellung von elastischen Formkörpern, insbesondere einer Dichte innerhalb des Bereichs von 0,8-1,4 g/$cm^3$, haben sich Kombinationen aus Zinksalzen langkettiger Carbonsäuren, insbesondere aus Zinkstearat und bestimmten, tertiäre Aminstickstoffatome aufweisenden organischen Verbindungen, als sehr gut geeignet erwiesen. Eine typische, derartige Verbindung mit tertiären Aminstickstoffatomen ist beispielsweise das Anlagerungsprodukt von ca. 5 Mol Propylenoxid an 1 Mol Ethylendiamin. Diese tert. Aminstickstoffatome aufweisenden Verbindungen stellen Lösungsmittel für das im allgemeinen schwer lösliche Zinksalz dar und bewirken gleichzeitig eine gewisse Löslichkeit des Zinkstearats in den Gemischen aus Verbindungen mit gegenüber Isocyanatgruppen reaktionsfähigen Gruppen, die die Reaktionspartner für die Polyisocyanate darstellen. Derartige Trennmittelkompositionen und ihre Verwendung bei der Herstellung von elastomeren Formkörpern sind beispielsweise in den US-Patenten 4 519 965, 4 581 386 oder 4 585 803 beschrieben.

Ein Nachteil dieser Trennmittelkompositionen des Standes der Technik besteht jedoch darin, daß die löslichkeitsvermittelnde Wirkung nur begrenzt ist, was sich darin äußert, daß Gemische von Verbindungen mit gegenüber Isocyanatgruppen reaktionsfähigen Gruppen, der bei dem genannten Verfahren eingesetzten Art, denen die Trennmittelkompositionen des Standes der Technik zugesetzt worden sind, tunlichst unmittelbar nach dem Zusatz der Trennmittelkomposition verarbeitet werden müssen, da bei einem längeren Lagern der Gemische die Trennwirkung deutlich abfällt. In der Praxis werden daher die Trennmittelkompositionen den Verbindungen mit gegenüber Isocyanatgruppen reaktionsfähigen Gruppen im allgemeinen erst kurz vor der Herstellung der Formkörper zugesetzt. Diese Feststellung gilt im übrigen auch für Trennmittelkompoisitonen, bestehend aus Zinksalzen, insbesondere Zinkstearat und Verbindungen mit primären Aminogruppen, wie sie beispielsweise in der EP-A-O 119 471 empfohlen werden.

Es war die der Erfindung zugrunde liegende Aufgabe, neue Trennmittelkompositionen zur Verfügung zu stellen, die nicht mit dem genannten Nachteil eines deutlichen Abfalls der Trennwirkung beim Lagern der gebrauchsfertigen Gemische behaftet sind.

Diese Aufgabe konnte mit der Bereitstellung der nachstehend näher beschriebenen erfindungsgemäßen Trennmittelkompositionen gelöst werden. In diesen erfindungsgemäßen Trennmittelkompositionen liegen als Lösungsmittel bzw. als Verträglichkeitsvermittler für das Zinksalz, insbesondere Zinkstearat, bestimmte, ausgewählte tert. Amine der nachstehend näher genannten Art vor. Die erfindungsgemäßen Trennmittelkompositionen zeichnen sich insbesondere durch eine Kombination folgender Vorteile aus :

1. Die mit den neuen Trennmittelkompositionen erzielbare Trennwirkung ist der Trennwirkung, die mit den Trennmittelkompositionen des genannten Standes der Technik erzielbar ist, zumindest ebenbürtig.

2. Gemische von Verbindungen mit gegenüber Isocyanatgruppen reaktionsfähigen Gruppen, wie sie zur Herstellung von elastomeren Formkörpern eingesetzt werden, und die die erfindungsgemäßen Trennmittelkompositionen enthalten, brauchen nicht sofort nach ihrer Herstellung (Zusatz der Trennmittelkomposition zu den anderen Komponenten) verarbeitet zu werden, da die gebrauchsfertigen Mischungen die Herstellung von Formkörpem mit sehr guten selbsttrennenden Eigenschaften weitgehend unabhängig von einer gegebenenfalls stattgefundenen Zwischenlagerung gestatten. In der Praxis hat dies zur Folge, daß

der Hersteller der Formkörper nicht mehr darauf angewiesen ist, die gebrauchsfertige, Formtrennmittel enthaltende Mischung in kurzen Zeitabständen durch Abmischung einer Trennmittelkomposition mit den übrigen Verbindungen frisch zuzubereiten.

Gegenstand der Erfindung ist eine Trennmittelkomposition bestehend im wesentlichen aus aus einer bei Raumtemperatur flüssigen Lösung von

(A) mindestens einem Zinksalz einer verzweigten oder unverzweigten, gesättigten oder ungesättigten aliphatischen Carbonsäure mit 8 bis 24 Koklenstoffatomen

in

(B) mindestens einer bei Raumtemperatur flüssigen, Stickstoffatome aufweisenden organischen Verbindung, wobei das Zinksalz in einer Menge von 10 bis 75 Gew.-%, bezogen auf das Gesamtgewicht der Komponenten (A) und (B), vorliegt, dadurch gekennzeichnet, daß die Komponente (B) aus mindestens einer Verbindung der Formel

$$H_2N\text{-}(\text{-}CH_2)_m\text{-}X$$

in welcher

X für einen Stickstoff und/oder Sauerstoff aufweisenden organischen Rest, ausgewählt aus der Gruppe bestehend aus

(i) 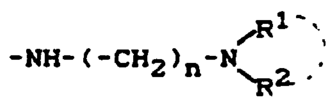 ,

(ii) 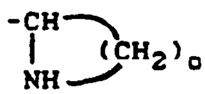 ,

(iii) 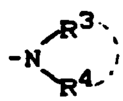 ,

(iv) $-O-R^5$

und

(v) $-NH-R^7$

steht, wobei in diesen Formeln

$R^1$ und $R^2$ für gleiche oder verschiedene Alkylreste mit 1 bis 10 Kohlenstoffatomen stehen oder gemeinsam mit dem Stickstoffatom einen, gegebenenfalls Sauerstoff oder ein $C_1$-$C_5$-alkylsubstituiertes Stickstoffatom als weiteres Heteroatom aufweisenden heterocyclischen Ring mit 6 Ringatomen bilden,

$R^3$ und $R^4$ für gleiche oder verschiedene Alkylreste mit 2 bis 10 Kohlenstoffatomen stehen oder zusammen mit dem Stickstoffatom einen, gegebenenfalls ein Sauerstoffatom oder ein $C_1$-$C_5$-alkylsubstituiertes Stickstoffatom als weiteres Heteroatom aufweisenden heterocyclischen Ring mit 6 Ringatomen bilden,

$R^5$ für einen geradkettigen oder verzweigten Alkylrest mit 2 bis 10 Kohlenstoffatomen steht oder einen Rest der Formel

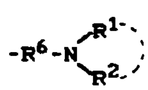

steht, wobei

$R^6$ für einen geradkettigen oder verzweigten Alkylenrest mit 2 bis 8 Kohlenstoffatomen steht und

$R^1$ und $R^2$ die bereits genannte Bedeutung haben, und

$R^7$ für einen Alkylrest mit 3 bis 10 Kohlenstoffatomen steht,

und wobei

m für eine ganze Zahl von 2 bis 10,

n für eine ganze Zahl von 2 bis 5 und
o für eine ganze Zahl von 2 bis 8
stehen, wobei eine Trennmittelkomposition aus Zinkstearat und/oder Zinkisostearat und 3-(2- Ethylhexoxy) propylamin ausgeschlossen ist.

Gegenstand der Erfindung ist auch ein als Reaktionspartner für organische Polyisocyanate geeignetes Gemisch bestehend aus

a) mindestens einer organischen Verbindung mit mindestens 2 gegenüber Isocyanatgruppen reaktionsfähigen Gruppen des Molekulargewichtsbereichs 400-12.000,
b) mindestens einer im Sinne der Isocyanat-Additionsreaktion difunktionellen, organischen Verbindung mit gegenüber Isocyanatgruppen reaktionsfähigen Wasserstoffatomen des Molekulargewichtsbereichs 62-399, in einer Menge von 5-50 Gew.-%, bezogen auf das Gewicht der Komponente a),
c) mindestens einem Formtrennmittel
und gegebenenfalls
d) weiteren, an sich bekannten Hilfs- und Zusatzmitteln, dadurch gekennzeichnet, daß es sich bei der Komponente c) um eine Trennmittelkomposition der vorstehend genannten Art handelt, wobei die Trennmittelkomposition in einer solchen Menge vorliegt, daß in dem Gemisch pro 100 Gew.-Teile der Komponente a) 0,5-10 Gew.-Teile Zinkstearat vorliegen.

Gegenstand der Erfindung ist auch ein Verfahren zur Herstellung von elastischen Formkörpern mit einer geschlossenen Oberflächenschicht aus Polyurethan- oder Polyharnstoffelastomeren durch Umsetzung in geschlossenen Formen eines Reaktionsgemisches aus

I einer Polyisocyanatkomponente, bestehend aus mindestens einem Di- oder Polyisocyanat mit ausschließlich aromatisch gebundenen Isocyanatgruppen
und
II einer innere Formtrennmittel und Verbindungen mit gegenüber Isocyanatgruppen reaktionsfähigen Gruppen, sowie gegebenenfalls weitere Hilfs- und Zusatzmittel enthaltenden Reaktionskomponente, dadurch gekennzeichnet, daß man als Komponente II Gemische der vorstehend genannten Art verwendet.

Der Begriff "Polyurethan" umfaßt im Rahmen der vorliegenden Erfindung auch Harnstoffgruppen aufweisende Polyurethane. Der Begriff "Polyharnstoff" umfaßt lediglich Urethangruppen-freie Polyharnstoffe. Die Aussage "bestehend im wesentlichen" bei der Beschreibung der erfindungsgemäßen Trennmittelkomposition soll lediglich zum Ausdruck bringen, daß die "wesentlichen" Komponenten die Komponenten A) und B) darstellen. Die Aussage soll nicht ausschließen, daß in den Kompositionen auch nach andere Bestandteile, wie beispielsweise aromatische Diamine der nachstehend unter $b^2$) genannten Art und/oder tert.Aminogruppen aufweisende Polyetherpolyole, beispielsweise das Anlagerungsprodukt von 5 Mol Propylenoxid an 1 Mol Ethylendiamin und/oder primäre Aminogruppen aufweisende Polyether, beispielsweise endständige Aminogruppen aufweisende Propylenoxide des Molekulargewichtsbereichs 200 bis 600 vorliegen.

Bei der Komponente (A) der erfindungsgemäßen Trennmittelkomposition handelt es sich um minde stens ein Zinksalz einer organischen, gegebenenfalls verzweigten und/ oder gegebenenfalls olefinisch ungesättigten Carbonsäure mit 8-24 Kohlenstoffatomen. Geeignete Zinksalze sind beispielsweise Zinkoc toat, -stearat, -oleat, -palmitat, -laurat oder beliebige Gemische derartiger Zinksalze. Besonders bevorzugt handelt es sich bei der Komponente (A) der erfindungsgemäßen Trennmittelkomposition um Zinkstearat.

Bei der Komponente (B) handelt es sich um spezielle, Aminogruppen aufweisende organische Verbindungen der vorstehend genannten Art oder um Gemische derartiger Verbindungen. Vorzugsweise werden Verbindungen der allgemeinen Formel

$$H_2N\text{-}(\text{-}CH_2)_m\text{-}X$$

eingesetzt, für welche
X einen Rest der Formel

(i) 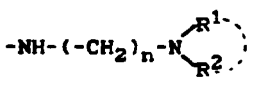 ,

steht, wobei
$R^1$ und $R^2$ für gleiche oder verschiedene Alkylreste mit 1 bis 8 Kohlenstoffatomen stehen oder zusammen mit dem Stickstoffatom einen 6-gliedrigen heterocyclischen Ring bilden, der gegebenenfalls ein Sauerstoffatom oder Methyl-substituiertes Stickstoffatom als zweites Heteroatom aufweisen kann;
oder für einen Rest der Formel

(ii) 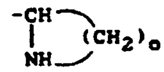 ,

steht, wobei
o für eine ganze Zahl von 3 bis 6 steht ;
oder für einen Rest der Formel

(iii) 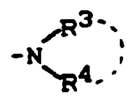 ,

steht, wobei
$R^3$ und $R^4$ für Alkylreste mit 3 bis 8 Kohlenstoffatomen stehen oder zusammen mit dem Stickstoffatom einen 6-gliedrigen heterocyclischen Ring bilden, der gegebenenfalls ein Sauerstoffatom oder ein Methylsubstituiertes Stickstoffatom als weiteres Heteroatom aufweisen kann ;
oder für einen Rest der Formel

(iv) $-O-R^5$

steht, wobei
$R^5$ für einen Alkylrest mit 4 bis 8 Kohlenstoffatomen oder einen Rest der Formel

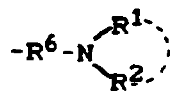

steht, wobei
$R^1$ und $R^2$ die zuletztgenannte bevorzugte Bedeutung haben und
$R^6$ für einen geradkettigen Alkylenrest mit 2 bis 6 Kohlenstoffatomen steht ;
oder einen Rest der Formel

(v) $-NH-R^7$

steht, wobei
$R^7$ für einen Alkylrest mit 3 bis 6 Kohlenstoffatomen steht,
und wobei jeweils m für 2 oder 3 steht.

Typische Beispiele derartiger Aminoverbindungen sind die nachstehend genannten Verbindungen der Formeln 1) bis 14) :

1) 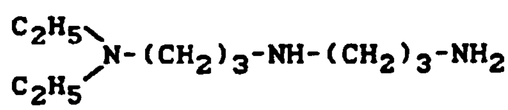

2) 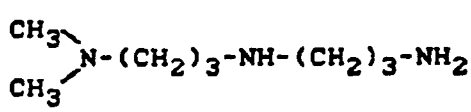

3) 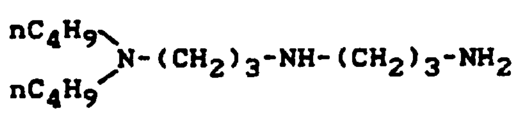

4) 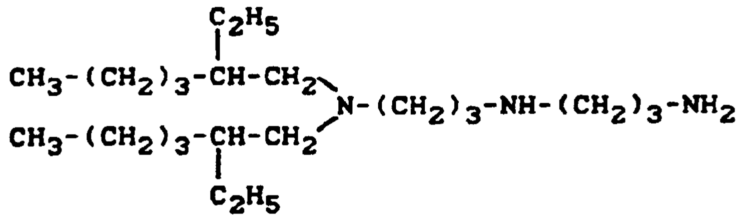

5) 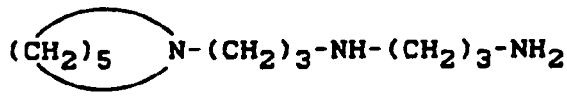

6) 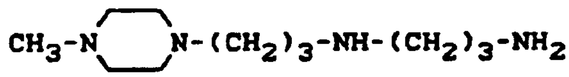

7) 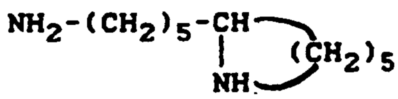

8) 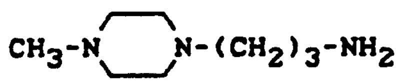

9) 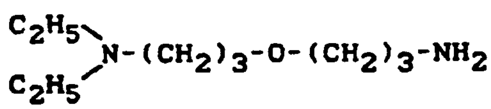

10) 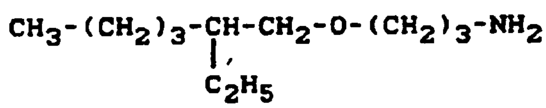

11) 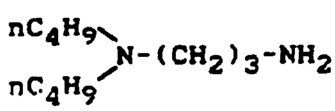

12) 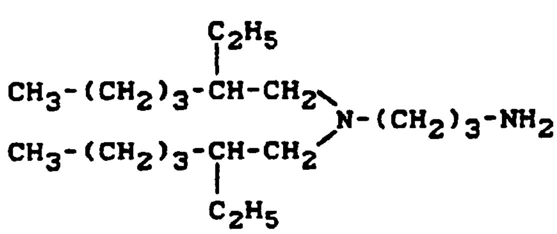

13) $nC_4H_9\text{-}NH\text{-}(CH_2)_3\text{-}NH_2$

14) 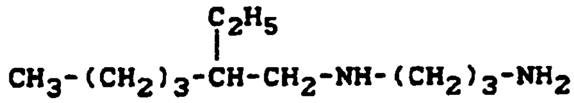

15) 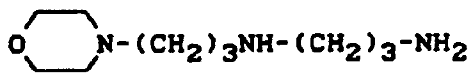

16) 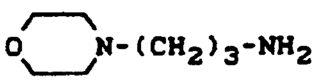

Beliebige Gemische derartiger Amine können ebenfalls als Komponente (B) in den erfindungsgemäßen Trennmittelkompositionen vorliegen. Die Verbindungen der Formeln 1) bis 7), sowie 13), 14) und 15) sind besonders bevorzugt, da sie bifunktionell einbaufähig sind.

Die Wirksamkeit dieser Verbindungen als Löslichkeitsvermittler für die Komponente (A) ist insofern überraschend, als oftmals bei nur geringfügigen Strukturveränderungen diese Wirksamkeit praktisch aufgehoben wird. Falls man beispielsweise in den Formeln 1) bis 6) das Segment

$$-NH\text{-}(CH_2)_3\text{-}NH_2$$

durch das Segment der Formel

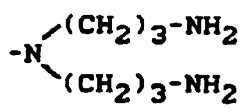

ersetzt, geht die Wirksamkeit verloren, ein Befund, welcher auch bei einem Ersatz der Verbindung 8) durch die Verbindung der Formel

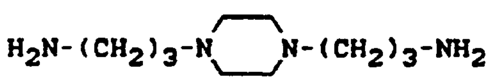

beobachtet wird.

In den erfindungsgemäßen Trennmittelkompositionen liegen die Einzelkomponenten (A) und (B) in solchen Mengen vor, daß der Gewichtsanteil des Zinksalzes, bezogen auf das Gesamtgewicht der Komponenten (A) und (B), bei 10-75, vorzugsweise 40-60 Gew.-%, liegt.

Die Herstellung der Trennmittelkompositionen erfolgt durch einfaches Vermischen der Einzelkomponenten bei Raumtemperatur oder mäßig erhöhter Temperatur. Es resultieren klare Lösungen des Zinksalzes in den Verbindungen mit tert. Aminogruppen.

In den erfindungsgemäßen Gemischen von Verbindungen mit gegenüber Isocyanatgruppen reaktionsfähigen Gruppen liegen die obengenannten Einzelkomponenten a), b), c) und gegebenenfalls zusätzlich weitere Hilfs- und Zusatzmittel d) vor.

Bei der Komponente a) handelt es sich in allgemeinen um Polyether des Molekulargewichtsbereichs 400-12.000, vorzugsweise 1.800-12.000, und insbesondere 2.000-6.000, welche 2 bis 3 gegenüber Isocyanatgruppen reaktionsfähigen Gruppen aufweisen. Es können auch entsprechende Polyethergemische verwendet werden, die im statistischen Mittel 2 bis 3 gegenüber Isocyanatgruppen reaktionsfähige Gruppen aufweisen. Bei den gegenüber Isocyanatgruppen reaktionsfähigen Gruppen handelt es sich um solche, die ausgewählt sind aus der Gruppe bestehend aus primären Hydroxylgruppen, sekundären Hydroxylgruppen und primären Aminogruppen, welche ihrerseits sowohl an aliphatische als auch an aromatische Kohlenstoffatome gebunden

sein können. Es können beliebige Gemische derartiger Verbindungen mit gegenüber Isocyanatgruppen reaktionsfähigen Gruppen verwendet werden, es ist auch möglich, solche Polyether zu verwenden, deren gegenüber Isocyanatgruppen reaktionsfähige Gruppen zum Teil aus Hydroxylgruppen und zum Teil aus Aminogruppen der genannten Art bestehen. Vorzugsweise handelt es sich bei der Komponente a) bzw. bei den Einzelbestandteilen der Komponente a) um Polyetherpolyole mit vorwiegend (mehr als 50 %, insbesondere mehr als 80 %, bezogen auf alle Hydroxylgruppen) primären Hydroxylgruppen oder um Polyether, deren gegenüber Isocyanatgruppen reaktionsfähige Gruppen aus aromatisch gebundenen primären Aminogruppen bestehen.

Als Komponente a) kommen somit sowohl Polyetherpolyole der in DE-AS 2 622 951 beschriebenen Art als auch Polyetherpolyole der in EP-B 0 017 928 genannten Art als auch Polyetherpolyole der in EP-B-O 044 481 genannten Art als auch beliebige Gemische derartiger Polyetherpolyole als auch Aminogruppen und gegebenenfalls Hydroxylgruppen aufweisende Polyether der in EP-B-0 081 701 genannten Art in Betracht, wobei unter den letztgenannten Polyethem mit Aminogruppen solche bevorzugt werden, die beispielsweise gemäß DE-OS 2 948 419 durch Hydrolyse von endständigen Isocyanatgruppen aufweisenden Verbindungen erhalten werden.

Bei der Komponente b) handelt es sich um Kettenverlängerungsmittels des Molekulargewichtsbereichs 62-399, d. h. insbesondere um in Sinne der Isocyanat-Additionsreaktion difunktionelle Verbindungen mit primären alkoholischen Hydroxylgruppen oder mit aromatisch gebundenen primären Aminogruppen. Grundsätzlich ist es auch möglich, daß die Komponente b) zwecks Sicherstellung einer gegebenenfalls erwünschten Verzweigung der resultierenden Polyurethane bzw. Polyharnstoffe eine untergeordnete Menge an höher als difunktionellen Verbindungen enthält.

Geeignete Kettenverlängerungsmittel b) sind beispielsweise

$b^1$) Polyhydroxylverbindungen des genannten Molekulargewichtsbereichs wie Ethylenglykol, Propylenglykol, Diethylenglykol, Dipropylenglykol, 1,3-Dihydroxipropan, 1,4-Dihydroxibutan, 1,6-Dihydroxihexan, Trimethylolpropan oder Glyzerin;

$b^2$) aromatisch gebundene primäre Aminogruppen aufweisende Diamine wie 1,4-Diaminobenzol, 2,4-Diaminotoluol, 2,4'-und/oder 4,4'-Diaminodiphenylmethan, oder vorzugsweise um solche aromatische Diamine, die zumindest in jeweils einer ortho-Stellung zu den Aminogruppen einen Alkylsubstituenten aufweisen, insbesondere solche, die in ortho-Stellung zu der ersten Aminogruppe mindestens einen Alkylsubstituenten und in ortho-Stellung zur zweiten Aminogruppe zwei Alkylsubstituenten mit jeweils 1-4 Kohlenstoffatomen aufweisen, besonders bevorzugt solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Beispiele für derartige bevorzugte bzw. besonders bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyi-2,4-diaminobenzol, 1-Methyl-3,5diethyl-2,6-diaminobenzol, 4,6-Dimethyl-2-ethyl-1,3 diaminobenzol, 3,5,3',5'-Tetraisopropyl-4,4'-diaminodiphenylmethan oder beliebige Gemische derartiger Diamine. Ganz bezonders bevorzugt werden 1-Methyl-3,5-diethyl-2,4-diaminobenzol oder dessen technische Gemische mit 1-Methyl-3,5-diethyl-2,6-diaminobenzol, die bis zu 35 Gew.-%, bezogen auf das Gemisch des letztgenannten Isomeren enthalten können, eingesetzt.

Grundsätzlich ist es auch möglich, Diamine der beispielhaft genannten Art in Abmischung mit Polyhydroxylverbindungen der beispielhaft genannten Art als Komponente b) zu verwenden.

Die Komponente b) liegt in den erfindungsgemäßen Gemischen im allgemeinen in einer Menge von 5-50, vorzugsweise 12-26 Gew.-%, bezogen auf das Gewicht der Komponente a), vor.

Bei der Komponente c) der erfindungsgemäßen Gemische handelt es sich um erfindungsgemäße Trennmittelkompositionen der oben beschriebenen Art. Diese Trennmittelkompositionen liegen in den erfindungsgemäßen Gemischen in solchen Mengen vor, daß auf 100 Gew.-Teile der Komponente a) 0,5-10 Gew.-Teile, vorzugswiese 1-4 Gew.-Teile, Zinkstearat entfallen.

Bei der gegebenenfalls in den erfindungsgemäßen Gemischen vorliegenden Hilfs- und Zusatzmitteln d) handelt es sich um solche der an sich bekannten Art, wie sie beispielsweise in EP-B-O 081 701, Kolonne 6, Zeile 40 -Kolonne 9, Zeile 31, beschrieben sind. Besonders hervorzuheben sind

$d^1$) Formtrennmittel des Standes der Technik, wie sie beispielsweise in DE-OS 1 953 637, DE-OS 2 121 670, DE-OS 2 431 968, DE-OS 2 404 310, DE-OS 2 319 648, DE-OS 2 356 692, DE-OS 2 363 452, DE-OS 2 427 273 oder DE-OS 2 431 968 beschrieben sind und die gegebenenfalls neben der erfindungswesentlichen Trennmittelkomponente c) mitverwendet werden können. Auch die gleichzeitige Mitverwendung von inneren Formtrennmitteln der in US-PS 4 519 965 oder US-PS 4 581 386 beschriebenen Art ist prinzipiell möglich. Dies bedeutet insbesondere, daß in den erfindungesgemäßen Trennmittelkompositionen c) neben den wesentlichen Komponenten A) und B) auch die in diesen Vorveröffentlichungen beschriebenen Verträglichkeitsmacher ("Compatibilizer") vorliegen können. So kann es beispielsweise zweckmäßig sein, neben der erfindungswesentlichen Komponente B) in den erfindungsgemäßen Trennmittelkompositionen Amin-gestartete Polyetherpolyole, beispielsweise das Additionsprodukt von 5 Mol Propylenoxid auf 1 Mol Ethyldiamin und/oder Polyetherpolyamine mit primären Aminogruppen wie z.B. endständige Aminogruppen aufweisende Polypropylenoxide des Molekulargewichtsbereichs 200 bis 600 in Mengen von bis zu 80 Gew.-%, vorzugsweise bis zu 50 Gew.-% und insbesondere bis zu 30 Gew.-%, bezogen auf das Gesamtgewicht der Komponente c), mitzuverwenden. Falls derartige Zusatzmittel d) eingesetzt werden, können diese, wie gesagt, bereits der Trennmittelkomposition c) einverleibt werden, welche anschließend zur Herstellung der Gemische aus a), b), c) und d) verwendet wird.

$d^2$) Katalysatoren für die Isocyanat-Polyadditionsreaktion, insbesondere tert. Amine oder organische Zinnverbindungen der in EP-B 0 081 701 beispielhaft genannten Art, die insbesondere dann in Mengen von 0,01-10, vorzugsweise 0,05-2 Gew.-%, bezogen auf das Gewicht der Komponente a), mitverwendet werden, wenn es sich bei der Komponente a) vorwiegend oder ausschließlich um Polyetherpolyole der oben beispielhaft genannten Art handelt. Im Falle der ausschließlichen Verwendung von Aminogruppen aufweisenden Verbindungen als Komponente a) und b) ist die Mitverwendung von Katalysatoren zwar möglich, im allgemeinen jedoch überflüssig.

Bei der Herstellung der erfindungsgemäßen Gemische können die Komponenten a) bis d) in beliebiger Reihenfolge miteinander vermischt werden. So ist es beispielsweise möglich, zunächst aus der Komponente c) und zumindest einem Teil der Komponente b), beispielsweise einem aromatischen Diamin der genannten Art, eine "Vormischung" herzustellen und diese anschließend, d.h. zu einem beliegib späteren Zeitpunkt mit den anderen Komponenten zu vermischen. Hierbei können die besagten aromatischen Diamine der Komponente c) in Mengen von bis zu 80 Gew.-%, vorzugsweise bis zu 50 Gew.-% und insbesondere bis zu 30 Gew.-%, bezogen auf das Gesamtgewicht der "Vormischung" einverleibt werden. Die genannte "Vormischung" stellt ebenfalls eine Trennmittelkomposition c) im Sinne der oben gemachten Ausführungen dar, da diese, wie ausgeführt, neben den wesentlichen Komponenten A) und B) und gegebenfalls den genannten Verträglichkeitsmachern des Standes der Technik auch derartige Diamine enthalten kann. Falls bei der Herstellung der erfindungsgemäßen Gemische als Komponente c) derartige "Vormischungen" eingesetzt werden, kann selbstverständlich die Menge der separat eingesetzten Komponente b) entsprechend reduziert werden, so daß die Gesamtmenge der Komponente b) in den erfindungsgemäßen Gemischen den oben gemachten Angaben entspricht.

Bei der Durchführung des erfindungsgemäßen Verfahrens werden die erfindungsgemäßen, die erfindungsgemäßen Trennmittelkompositionen enthaltenden Gemische von Verbindungen mit gegenüber Isocyanatgruppen reaktionsfähigen Gruppen mit organischen Polyisocyanaten I zur Reaktion gebracht. Geeignete Polyisocyanate I sind solche mit ausschließlich aromatisch gebundenen Isocyanatgruppen, wie sie beispielsweise in EP-B 0 081 701, Kolonne 3, Zeile 30, bis Kolonne 4, Zeile 25, beschrieben sind.

Ganz besonders bevorzugt handelt es sich bei der Komponente I um bei Raumtemperatur flüssige, gegebenenfalls Urethangruppen und/oder Carbodimidgruppen und/oder Uretonimingruppen aufweisende Polyisocyanate oder Polyisocyanatgemische der Diphenylmethanreihe. Unter "Polyisocyanaten bzw. Polyisocyanatgemischen der Diphenylmethanreihe" sind hierbei sowohl Polyisocyanatgemische zu verstehen, die in an sich bekannter Weise durch Phosgenierung von Anilin/Formaldehyd-Kondensabn zugänglich sind als auch Diisocyanat-Fraktionen, wie sie destillativ aus diesen Gemischen abgetrennt werden können. Zu den ganz besonders bevorzugten Polyisocyanaten I gehören die bei Raumtemperatur flüssigen Derivate des 4,4'-Diisocyanato-diphenylmethan, beispielsweise die Urethangruppen aufweisenden Polyisocyanate, die gemäß DE-PS 1 618 380 durch Umsetzung von 1 Mol 4,4'-Diisocyanato-diphenylmethan mit 0,05-0,3 Mol an niedermolekularen Diolen oder Triolen, vorzugsweise Polypropylenglykolen mit einem unter 700 liegenden Molekulargewicht zugänglich sind, oder Carbodimid-und/oder Uretonimingruppen aufweisenden Diisocyanate auf Basis von 4,4'-Diisocyanato-diphenylmethan, wie sie beispielsweise gemäß US-PS 3 152 162, 3 384 653, 3 429 256, DE-OS 2 537 685 oder EP-A-5233 zugänglich sind. Auch die entsprechenden Modifizierungsprodukte auf Basis von Gemischen aus 2,4'- und 4,4'-Diisocyanatodiphenylmethan oder auch Gemische der, wie beschrieben, modifizierten 4,4'-Diisocyanato-diphenylmethane mit untergeordneten Mengen an höher als difunktionellen Polyisocyanaten der Diphenylmethanreihe, beispielsweise solche der in DE-OS 2 624 526 beschriebenen Art gehören zu den bevorzugten Polyisocyanaten.

Die beim erfindungsgemäßen Verfahren zum Einsatz gelangende Polyisocyanatkomponente I wird mit der Komponente II, d. h. dem erfindungsgemäßen, die erfindungsgemäße Trennmittelkomposition enthaltenden Gemisch der gegenüber Isocyanatgruppen reaktionsfähigen Gruppen zur Reaktion gebracht. Hierbei wird die Menge der Polyisocyanatkomponente I so bemessen, daß auf jede gegenüber Isocyanatgruppen reaktionsfähige Gruppe der Komponente II 0,7-1,3, vorzugsweise 1,0-1,2, Isocyanatgruppen der Komponente I (entsprechend einer NCO-Kennzahl von 70-130, vorzugsweise 100-120) entfallen. In diese Berechnung gehen auch die in der Komponente c) vorliegenden primären oder sekundären Aminogruppen, nicht jedoch die gegebenenfalls in zusätzlich mitverwendeten Trennmitteln vorliegenden Carboxylgruppen ein.

Bei der Durchführung des erfindungsgemäßen Verfahrens wird vorzugsweise nach der bekannten Reaktionsspritzgußtechnik (RSG-Verfahren) gearbeitet Die Einzelkomponenten I und II werden hierbei vermischt und unmittelbar nach ihrer Durchmischung in die jeweilige Form eingebracht. Die Menge des in die Form eingebrachten, gegebenenfalls schäumfähigen Gemischs, wird im allgemeinen so bemessen, daß die Formkörper eine Dichte von 0,25-bis 1,4, vorzugsweise von 0,8-1,4 und insbesondere von 0,9-1,2 g/cm³ aufweisen. Insbesondere bei der Mitverwendung von mineralischen Füllstoffen können Formkörper mit einer über 1,2 g/cm³ liegenden Dichte resultieren. Aus den gemachten Dichteangaben ist bereits ersichtlich, daß es sich bei den erfindungsgemäßen Formkörpern vorzugsweise um massive bzw. allenfalls mikrozellulare Kunststoffe handelt Die Formkörper könnnen im allgemeinen in völliger Analogie zur Lehre der DE-AS 2 622 951 bzw. der EP-B 0 081 701 nach einer Formstandzeit von 5-90, vorzugsweise 20-60 Sekunden entformt werden.

Als Ausgangstemperatur des in die Form eingebrachten Gemischs wird im allgemeinen eine Temperatur zwischen 10 und 60, vorzugsweise 20 bis 50° C, gewählt. Die Temperatur der Form beträgt im allgemeinen 40-140, vorzugsweise 50-70° C.

Das erfindungsgemäße Verfahren eignet sich insbesondere zur Herstellung von hochwertigen elastomeren Formkörpern, die sich insbesondere zur Herstellung von flexiblen Automobilstoßstangen bzw. Karosserieelementen eignen.

Gegenüber den entsprechenden Formkörpern des Standes der Technik zeichnen sich die erfindungsgemäßen Formkörper durch eine im allgemeinen verbesserte Entformbarkeit aus, wobei diese verbesserte Entformbarkeit auch in jenen Fallen gegeben ist, in welchen die beim erfindungsgemäßen Verfahren eingesetzte Komponente II nicht unmittelbar vor der Verarbeitung der Komponente II durch Abmischung der erfindungsgemäßen Trennmittelkomposition mit den übrigen Bestandteilen hergestellt worden ist. Die vorzüglichen selbsttrennenden Eigenschaften der erfindungsgemäßen Formkörper sind vielmehr vom "Alter" der Komponente II weitgehend unabhängig.

In den nochfolgenden Beispielen beziehen sich alle Prozentangaben auf Gewichsprozente.

<u>Beispiele 1 bis 9</u> (Herstellung von erfindungsgemäß als Komponente (B) geeigneten Aminoverbindungen)

1. 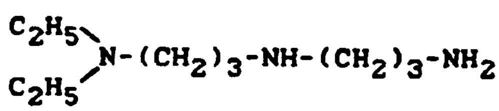

Zu 1040 g (8 m) Diethylpropylendiamin in 500 ml Methanol werden bei 20° C 530 ml Acrylnitril getropft; man läßt über Nacht rühren und engt ein.
Rohausbeute: 1487 g
1487 g des Rohproduktes werden bei 100°C, 140 bar Wasserstoff mit 90 g Raney Nickel und 400 ml fl. Ammoniak hydriert Es wird abgesaugt, eingeengt und destilliert.
Kp 70° C bei 0,1 mbar, Ausbeute 1320 g,
Reinheit nach GC 98,2 %.

2. 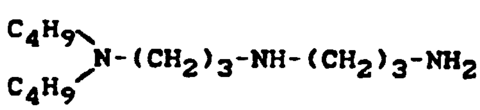

Zu 1600 g (8,6 m) Di-n-butylpropylendiamin in 500 ml Methanol werden bei 20° C 565 ml Acrylnitril getropft; man rührt über Nacht und engt ein.
Rohausbeute : 2086 g
2086 g des Rohproduktes werden bei 100° C, 140 bar Wasserstoff mit 120 g Raney Nickel und 400 ml fl. Ammoniak hydriert. Es wird abgesaugt, eingeengt und destilliert.
Kp 127° C bei 0,1 mbar, Ausbeute 1750 g,
Reinheit nach GC 99,9 %.

3. 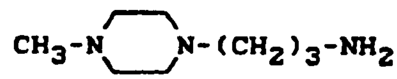

Zu 500 g Methylpiperazin in 500 ml Methanol werden 330 ml Acrylnitril bei 25° C getropft ; man läßt über Nacht rühren, engt ein und erhält 768 g des Nitrils, welche in 300 ml fl. Ammoniak mit 80 g Raney Nickel bei 100°C und 80 bar Wasserstoff hydriert werden.
Man saugt ab, engt ein und destilliert.
Kp 47° C bei 0,01 mbar, Ausbeute 690 g,
Reinheit nach GC 100 %.

4. 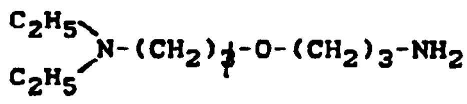

Zu 1170 g (10 m) Diethylethanolamin wird 0,5 g Na gegeben und aufgelöst ; anschließend werden bei 25° C 660 ml Acrylnitril zugetropft. Man läßt über Nacht nachrühren, engt ein und erhält 1711 g Nitril.
1670 g des Nitrils werden bei 90° C und 140 bar Wasserstoff mit 1500 ml fl. Ammoniak und 250 g Raney Nickel hydriert.
Es wird abgesaugt, eingeengt und destilliert.
Kp 60° C bei 0,01 mbar, Ausbeute 1330 g,
Reinheit nach GC 97,3 %.

5. 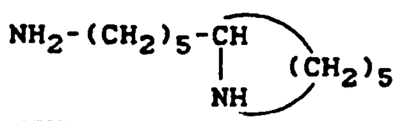

5.1 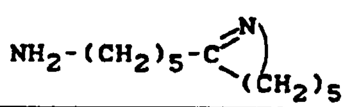

1130 g ε-Caprolactam und 1200 g CaO werden auf 500° C erhitzt, wobei das sich bildende Reaktionsprodukt abdestilliert. Anschließend wird mit 1000 ml einer 20 %igen Natronlauge unter Rückfluß gekocht, abgekühlt und die obere Phase durch Destillation gereinigt.
Kp. 120 bis 123° C bei 3,5 mbar, Ausbeute 550 g (entsprechend 57% der Theorie).
Hydrierung :
2,5 kg der Verbindung 5.1) werden mit 200 g Raney Nickel bei 70° C und einem Wasserstoffdruck von 180 bar innerhalb von 20 Stdn. hydriert. Man trennt nach Abkühlen vom Katalysator und destilliert.
Kp. 90° C bei 0,1 mbar, Ausbeute 2320 g (entspr. 92 % der Theorie), Reinheit nach GC 99,9 %.

6. 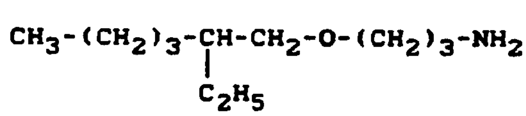

1300 g 2-Ethyl-hexanol-1 werden mit 0,5 g Na versetzt und nach Auflösen werden dann 660 ml Acrylnitril bei

30° C zugetropft; man rührt Nacht nach und engt ein.
1830 g des Nitrils werden bei 90° C und 120 bar Wasserstoff mit 1600 ml fl. Ammoniak und 270 g Raney Nickel hydriert, abgesaugt und destilliert.
Kp. 95° C bei 32 mbar, Ausbeute 1500 g,
Reinheit nach GC 99,2 %.

7. 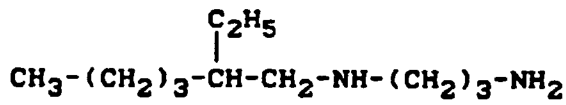

Zu 645 g 2-Ethyl-hexyl-amin in 500 ml Methanol werden 265 g Acrylnitril getropft und über Nacht gerührt; man engt ein und erhält 900 g Nitril, welches in 500 ml Methanol mit 300 ml fl. Ammoniak, 75 g Raney Nickel bei 100° C und 150 bar Wasserstoff hydriert wird. Man saugt ab und destilliert.
Kp. 62° C bei 0,01 mbar, Ausbeute 721 g,
Reinheit nach GC 98,5 %.

8. 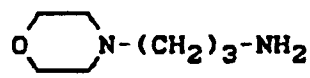

In 870 g Morpholin, gelöst in 500 ml Methanol, werden bei 20° C 660 ml Acrylnitril getropft. Anschließend wird über Nacht gerührt, eingeengt und das Nitril bei 100° C in Gegenwart von 75 g Raney-Nickel und von 300 ml flüssigem Ammoniak bei einem Wasserstoffdruck von 120 bar hydriert. Man saugt ab und destilliert.
Kp. 103° C bei 15 mbar, Ausbeute 1360 g, Reinheit nach GC 99,5 %

9. 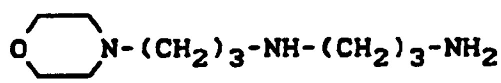

In 1440 g Aminopropylmorpholin, gelöst in 500 ml Methanol, werden bei 20° C 660 ml Acrylnitril getropft, über Nacht gerührt, eingeengt und das Nitril bei 100° C in Gegenwart von 90 g Raney-Nickel und von 400 ml flüssigem Ammoniak bei einem Wasserstoffdruck von 140 bar hydriert. Es wird abgesaugt und destilliert.
Kp. 75° C bei 0,1 mbar, Ausbeute 1900 g, Reinheit nach GC 98,7 %.

Beispiele 10 - 11 (erfindungsgemäßes Verfahren) und

Beispiele 12-13 (Vergleichsbeispiele)

Die Verarbeitung der in den nachstehenden Beispielen eingesetzten Komponenten I) und II) erfolgte mit Hilfe der Reaktionsspritzgußtechnik (RSG oder englisch "reaction injection moulding" (RIM)).

Die Polyisocyanatkomponente und das Polyolgemisch werden einem Hochdruckaggregat zugeführt und nach intensiver Vermischung in einem zwangsgesteuerten Mischkopf in kürzester Zeit in ein Metallwerkzeug gedrückt.

Das Werkzeug - eine Schüsselform aus Werkzeugstahl - erlaubt die Herstellung eines Formteils der folgenden Abmessungen:
Außendurchmesser Boden 178 mm
Außendurchmesser Rand 186 mm
Wandstärke 4 mm
Formteilhöhe 68 mm
Konizität 3,50°
Anguß: Quellanguß, mittig am Boden (∅ = 10 mm)

Bei Entformung der Schüssel sind an den Wandflächen starke Scherkräfte zu überwinden. Zur Bestimmung der Aufreißkräfte dient ein Kraftaufnehmer mit Dehnungsmeßstreifen als Meßelement (Fa. Hottinger

Baldwin Meßtechnik GmbH, D-6100 Darmstadt 1).

Die Temperatur der Rohstoffe beträgt 45° C, die Temperatur des Werkzeugs 65° C. Die Formstandzeit wird auf 20 sec. und die Taktzeit auf 60 sec. eingestellt.

Die Werkzeugoberfläche wird vor Herstellung des ersten Formteils mit einem handelsüblichen Trennmittel (RTCW 2006, Hersteller Chem-Trend International, 3205 E, Grand River, Howell, Michigan 48843/US) behandelt.

Beispiel 10

1,80 Gew.-Teile Zinkstearat (Haro Chem ZGD, Hersteller Haro Chem") werden in
1,80 Gew.-Teilen N-(3-Diethylaminopropyl)-1,3-propandiamin gelöst und mit
74,98 Gew.-Teilen eines Polyethers der OH-Zahl 28, der durch Addition von Propylenoxid und anschließende Addition von Ethylenoxid an Trimethylolpropan erhalten wurde (Gewichtsverhältnis PO:EO = 83 :17),
20,70 Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6),
0,18 Gew.-Teilen Dimethylzinndilaurat und
0,54 Gew.-Teilen 1,4-Diazabicyclo-(2,2,2)-octan als 33 %ige Lösung (Dabco 33 LV, Air Products)
∗ Haagen Chemie b. V.
P.O. Box 14
6040 AA Roermond (Holland)

zu einer Polyolkomponente II vereinigt und mit 58,2 Gew.-Teilen eines Umsetzungsproduktes aus Tripropylenglykol und 4,4'-Diphenylmethandiisocyanat (23 Gew.-% NCO, = Komponente I) nach dem RSG-Verfahren verarbeitet.

Nach 50 Entformungen wurde die Versuchsreihe abgebrochen. Bei der letzten Entformung wurde eine Aufreißkraft von 11,7 kN gemessen (vgl. Tabelle).

Die Polyolformulierung II wurde auf der RSG-Anlage belassen und nach 3 Tagen erneut geprüft. Es konnten mühelos 50 Entformungen durchgeführt werden. Bei der letzten Entformung wurde eine Aufreißkraft von 17,7 kN gemessen. Die Polyolformulierung war zu diesem Zeitpunkt klar, eine Trübung durch ausfallendes Zinkstearat nicht zu erkennen.

Beispiel 11

1,80 Gew.-Teile Zinkstearat des in Beispiel 10 verwendeten Typs werden in
1,80 Gew.-Teilen N-(3-Aminopropyl)-N'methyl piperazin gelöst und mit
74,98 Gew.-Teilen eines Polyethers der OH-Zahl 28, der durch Addition von Propylenoxid und anschließende Addition von Ethylenoxid an Trimethylolpropan erhalten wurde (Gewichtsverhältnis PO :EO = 83 :17),
20,70 Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6),
0,18 Gew.-Teilen Dimethylzinndilaurat und
0,54 Gew.-Teilen 1,4-Diazabicyclo-(2,2,2)-octan als 33 %ige Lösung (Dabco 33 LV, Air Products). zu einer Polyolkomponente II vereinigt und mit 56,7 Gew.-Teilen eines Umsetzungsproduktes aus Tripropylenglykol und 4,4'-Diphenylmethandiisocyanat (23 Gew.-% NCO, = Komponente I) nach dem RSG-Verfahren verarbeitet.

Nach 50 Entformungen wurde die Versuchsreihe abgebrochen. Bei der letzten Entformung wurde eine Aufreißkraft von 9,4 kN gemessen (vgl. Tabelle).

Die Polyolformulierung II wurde auf der RSG-Anlage belassen und nach 3 Tagen erneut geprüft. Es konnten mühelos 50 Entformungen durchgeführt werden. Bei der letzten Entformung wurde eine Aufreißkraft von 11,7 kN gemessen. Die Polyolformulierung war zu diesem Zeitpunkt klar, eine Trübung durch ausfallendes Zinkstearat nicht zu erkennen.

Beispiel 12 (Vergleich)

1,80 Gew.-Teile Zinkstearat des in Beispiel 10 verwendeten Typs werden in
1,80 Gew.-Teilen eines Amin-gestarteten Poly(oxyalkylen)polyether Tetrols mit einer OHZ von ca. 630, erhalten durch Addition von ca. 5 Mol Propylenoxid auf ein Mol Ethylendiamin, gelöst und mit
74,98 Gew.-Teilen eines Polyethers der OH-Zahl 28, der durch Addition von Propylenoxid und anschlie ßende Addition von Ethylenoxid an Trimethylolpropan erhalten wurde (Gewichtsverhältnis PO :EO = 83 :17),
20,70 Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6),

0,18 Gew.-Teilen Dimethylzinndilaurat und
0,54 Gew.-Teilen 1,4-Diazabicyclo-(2,2,2)-octan als 33 %ige Lösung (Dabco 33 LV, Air Products)
zu einer klaren Polyolkomponente II vereinigt und mit 58,4 Gew.-Teilen eines Umsetzungsproduktes aus Tripropylenglykol und 4,4'-Diphenylmetandiisocyanat (23 Gew.-% NCO, = Komponente I) nach dem RSG-Verfahren verarbeitet.

Nach 50 Entformungen wurde die Versuchsreihe abgebrochen. Bei der letzten Enfformung wurde eine Aufreißkraft von 11,0 kN gemessen (vgl. Tabelle).

Die Polyolformulierung wurde auf der RSG-Anlage belassen und nach einem Tag erneut geprüft. Bei der letzten Entformung wurden 14,4 kN gemessen. Die Polyolformulierung war durch ausgefallenes Zinkstearat getrübt.

Beispiel 13 (Vergleich)

1,80 Gew.-Teile Zinkstearat des in Beispiel 10 verwendeten Typs werden in
1,80 Gew.-Teilen eines bifunktionellen mit primären Aminogruppen terminierten Polyethers vom ungefähren Molgewicht 400 (Texaco's D 400) gelöst und mit
74.98 Gew.-Teilen eines Polyethers der OH-Zahl 28, der durch Addition von Propylenoxid und anschließende Addition von Ethylenoxid an Trimethylolpropan erhalten wurde (Gewichtsverhältnis PO :EO = 83 :17),
20,70 Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6),
0,18 Gew.-Teilen Dimethylzinndilaurat und
0,54 Gew.-Teilen 1,4-Diazabicyclo-(2,2,2)-octan als 33 %ige Lösung (Dabco 33 LV, Air Products)
zu einer klaren Polyolkomponente II vereinigt und mit 56,2 Gew.-Teilen eines Umsetzungsproduktes aus Tripropylenglykol und 4,4'-Diphenylmethandiisocyanat (23 Gew.-% NCO, = Komponente I) nach dem RSG-Verfahren verarbeitet.

Die Versuchsreihe wurde nach 26 Entformungen abgebrochen. Bei der letzten Entformung wurde eine Aufreißkraft von 13,2 kN gemessen. Weitere Formteile sind nicht zu entformen.

**Tabelle**

| Beispiel | Prüfung | Aufreißkraft (kN) 10. Formteil | 25. | 50. | Aussehen der Polyolformulierung nach Lagerung bei +20°C |
|---|---|---|---|---|---|
| 10 | direkt | 4,4 | 7,1 | 11,7 | klar |
| | nach 3 Tagen | 4,7 | 9,6 | 17,7 | klar |
| 11 | direkt | 4,7 | 6,5 | 9,4 | klar |
| | nach 3 Tagen | 4,6 | 7,3 | 11,7 | klar |
| 12 | direkt | 5,6 | 8,0 | 11,0 | klar, |
| | nach 1 Tag | 6,1 | 9,2 | 14,4 | trübe, Sediment |
| 13 | direkt | 8,1 | 12,8 | - | klar |
| | nach 1 Tag | - | - | - | trübe, Sediment |

## Patentansprüche

1. Trennmittelkomposition bestehend im wesentlichen aus einer bei Raumtemperatur flüssigen Lösung von (A) mindestens einem Zinksalz einer verzweigten oder unverzweigten, gesättigten oder ungesättigten aliphatischen Carbonsäure mit 8 bis 24 Kohlenstoffatomen
in
(B) mindestens einer bei Raumtemperatur flüssigen, Stickstoffatome aufweisenden organischen Verbindung,
wobei das Zinksalz in einer Menge von 10 bis 75 Gew.-%, bezogen auf das Gesamtgewicht der

Komponenten (A) und (B), vorliegt, dadurch gekennzeichnet, daß die Komponente (B) aus mindestens einer Verbindung der Formel

$$H_2N\text{-}(\text{-}CH_2)_m\text{-}X$$

in welcher

X für einen Stickstoff und/oder Sauerstoff aufweisenden organischen Rest, ausgewählt aus der Gruppe bestehend aus

(i) 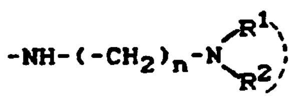 ,

(ii) 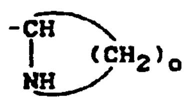 ,

(iii) 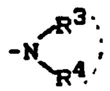 ,

(iv) $-O-R^5$

und

(v) $-NH-R^7$

steht, wobei in diesen Formeln

$R^1$ und $R^2$ für gleiche oder verschiedene Alkylreste mit 1 bis 10 Kohlenstoffatomen stehen oder gemeinsam mit dem Stickstoffatom einen, gegebenenfalls Sauerstoff oder ein $C_1$-$C_5$-alkylsubstituiertes Stickstoffatom als weiteres Heteroatom aufweisenden heterocyclischen Ring mit 6 Ringatomen bilden,

$R^3$ und $R^4$ für gleiche oder verschiedene Alkylreste mit 2 bis 10 Kohlenstoffatomen stehen oder zusammen mit dem Stickstoffatom einen, gegebenenfalls ein Sauerstoffatom oder ein $C_1$-$C_5$-alkylsubstituiertes Stickstoffatom als weiteres Heteroatom aufweisenden heterocyclischen Ring mit 6 Ringatomen bilden,

$R^5$ für einen geradkettigen oder verzweigten Alkylrest mit 2 bis 10 Kohlenstoffatomen steht oder einen Rest der Formel

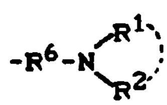

steht, wobei

$R^6$ für einen geradkettigen oder verzweigten Alkylenrest mit 2 bis 8 Kohlenstoffatomen steht und $R^1$ und $R^2$ die bereits genannte Bedeutung haben, und

$R^7$ für einen Alkylrest mit 3 bis 10 Kohlenstoffatomen stehen,

und wobei

m für eine ganze Zahl von 2 bis 10,

n für eine ganze Zahl von 2 bis 5 und

o für eine ganze Zahl von 2 bis 8 stehen. wobei eine Trennmittelkomposition aus Zinkstearat und/oder Zinkisostearat und 3-(2-Ethyl-hexoxy) propylamin ausgeschlossen ist.

**2.** Als Reaktionspartner für organische Polyisocyanate geeignetes Gemisch, bestehend aus

a) mindestens einer organischen Verbindung mit mindestens 2 gegenüber Isocyanatgruppen reaktionsfähigen Gruppen des Molekulargewichtsbereichs 400-12.000,

b) mindestens einer im Sinne der Isocyanat-Additionsreaktion difunktionellen, organischen Verbindung

mit gegenüber Isocyanatgruppen reaktionsfähigen Wasserstoffatomen des Molekulargewichtsbereichs 62-399, in einer Menge von 5-50 Gew.-%, bezogen auf das Gewicht der Komponente a),
c) mindestens einem Formtrennmittel
und gegebenenfalls
d) weiteren, an sich bekannten Hilfs- und Zusatzmitteln,
dadurch gekennzeichnet, daß es sich bei der Komponente c) um eine Trennmittelkomposition gemäß Anspruch 1 handelt, wobei die Trennmittelkomposition in einer solchen Menge vorliegt, daß in dem Gemisch pro 100 Gew.-Teile der Komponente a) 0,5-10 Gew.-Teile Zinkstearat vorliegen.

**3.** Gemisch gemäß Anspruch 2, dadurch gekennzeichnet, daß
die Komponente a) aus mindestens einem Polyether des Molekulargewichtsbereichs 1.800-12.000 besteht, der insgesamt 2 oder 3 gegenüber Isocyanatgruppen reaktionsfähige Gruppen, ausgewählt aus der Gruppe bestehend aus primären alkoholischen Hydroxylgruppen, sekundären alkoholischen Hydroxylgruppen und primären Aminogruppen, aufweist,
die Komponente b) aus 1-Methyl-3,5-diethyl-2,4-diaminobenzol oder einem Gemisch aus diesem Diamin mit 1-Methyl-3,5-diethyl-2,6-diaminobenzol mit einem Gehalt von bis zu 35 Gew.-% des letztgenannten Isomeren besteht, und
die Komponente c) aus einer Trennmittelkomposition gemäß Anspruch 1 besteht.

**4.** Verfahren zur Herstellung von elastischen Formkörpern mit einer geschlossenen Oberflächenschicht aus Polyurethan- oder Polyharnstoffelastomeren durch Umsetzung in geschlossenen Formen eines Reaktionsgemisches aus
I einer Polyisocyanatkomponente, bestehend aus mindestens einem Di- oder Polyisocyanat mit ausschließlich aromatisch gebundenen Isocyanatgruppen
mit
II einer innere Formtrennmittel und Verbindungen mit gegenüber Isocyanatgruppen reaktionsfähigen Gruppen, sowie gegebenenfalls weitere Hilfs- und Zusatzmittel enthaltenden Reaktionskomponente,
dadurch gekennzeichnet, daß man als Komponente II Gemische gemäß Anspruch 2 oder 3 verwendet.

**5.** Verfahren gemäß Anspruch 4, dadurch gekennzeichnet, daß man als Komponente I bei Raumtemperatur flüssige, gegebenenfalls Urethan- und/oder Carbodiimidund/oder Uretonimingruppen aufweisende Polyisocyanate oder Polyisocyanatgemische der Diphenylmethanreihe verwendet.

## Claims

**1.** Release agent compositions consisting essentially of a solution - liquid at room temperature - of
(A) at least one zinc salt of a branched or unbranched, saturated or unsaturated, aliphatic $C_{8-24}$ carboxylic acid
in
(B) at least one organic compound containing nitrogen atoms which is liquid at room temperature,
the zinc salt being present in a quantity of 10 to 75% by weight, based on the total weight of components (A) and (B), characterized in that component (B) consists of at least one compound corresponding to the formula

$$H_2N\text{-}(\text{-}CH_2)_m\text{-}X$$

in which
X is a nitrogen- and/or oxygen-containing organic radical selected from the group consisting of

(i) 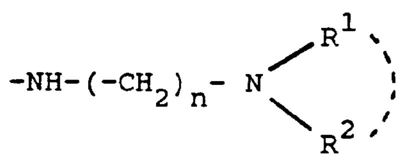 ,

(ii) 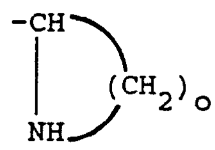 ,

(iii) 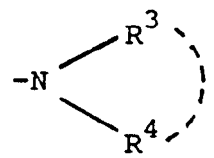 ,

(iv) -O-$R^5$

and

(v) -NH-$R^7$

in the above formulae,

$R^1$ and $R^2$ may be the same or different and represent $C_{1-10}$ alkyl radicals or, together with the nitrogen atom, form a heterocyclic ring with 6 ring atoms optionally containing oxygen or a $C_{1-5}$-alkyl-substituted nitrogen atom as a further hetero atom,

$R^3$ and $R^4$ may be the same or different and represent a $C_{2-10}$ alkyl radical or, together with the nitrogen atom, form a heterocyclic ring with 6 ring atoms optionally containing an oxygen atom or a $C_{1-5}$-alkyl-substituted nitrogen atom as a further hetero atom,

$R^5$ is a linear or branched $C_{2-10}$ alkyl radical or a radical corresponding to the formula

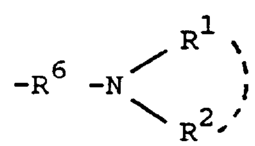

where

$R^6$ is a linear or branched $C_{2-8}$ alkylene radical and $R^1$ and $R^2$ are as already defined,

and

$R^7$ is a $C_{3-10}$ alkyl radical,

m is an integer of 2 to 10,

n is as integer of 2 to 5 and

o is an integer of 2 to 8,

excluding a release agent composition of zinc stearate and/or zinc isostearate and 3-(2-ethylhexoxy)-propylamine.

**2.** A mixture suitable as a reaction component for organic polyisocyanates, consisting of

a) at least one organic compound containing at least 2 isocyanate-reactive groups and having a molecular weight in the range from 400 to 12,000,

b) at least one organic compound with a functionality of two in the isocyanate addition reaction, which contains isocyanate-reactive hydrogen atoms and has a molecular weight in the range from 62 to 399, in a quantity of 5 to 50% by weight, based on the weight of component a),

c) at least one mould release agent

and optionally

d) other auxiliaries and additives known per se, characterized in that component c) is a release agent composition according to claim 1, the release agent composition being present in such a quantity that 0.5 to 10 parts by weight zinc stearate are present in the mixture per 100 parts by weight component a).

3. A mixture as claimed in claim 2, characterized in that
   component a) consists of at least one polyether with a molecular weight of 1,800 to 12,000 which contains a total of 2 or 3 isocyanate-reactive groups selected from the group consisting of primary alcoholic hydroxyl groups, secondary alcoholic hydroxyl groups and primary amino groups,
   component b) consists of 1-methyl-3,5-diethyl-2,4-diaminobenzene or of a mixture of this diamine with 1-methyl-3,5-diethyl-2,6-diaminobenzene containing up to 35% by weight of the last-mentioned isomer and
   component c) consists of a release agent composition according to claim 1.

4. A process for the production of elastic mouldings having a compact surface skin of polyurethane or polyurea elastomers by reaction in closed moulds of a reaction mixture of
   I a polyisocyanate component consisting of at least one di- or polyisocyanate containing only aromatically bound isocyanate groups
   with
   II a reaction component containing internal mould release agents and compounds containing isocyanate-reactive groups and, optionally, other auxiliaries and additives,
   characterized in that mixtures according to claim 2 or 3 are used as component II.

5. A process as claimed in claim 4, characterized in that optionally urethane- and/or carbodiimide- and/or uretoneimine-modified polyisocyanates or polyisocyanate mixtures of the diphenyl methane series which are liquid at room temperature are used as component I.

## Revendications

1. Composition d'agent de démoulage consistant essentiellement en une solution liquide à température ambiante de:
   (A) au moins un sel de zinc d'un acide carboxylique aliphatique ramifié ou non, saturé ou insaturé, en $C_8$-$C_{24}$
   dans
   (B) au moins un composé organique liquide à température ambiante et contenant de atomes d'azote,
   le sel de zinc étant présent en quantités de 10 à 75% du poids total des composants (A) et (B), caractérisée en ce que le composant (B) consiste en au moins un composé de formule :

$$H_2N\text{-}(\text{-}CH_2)_m\text{-}X$$

   dans laquelle
   X représente un groupe organique contenant de l'azote et/ou de l'oxygène, choisi parmi les suivants :

(i) 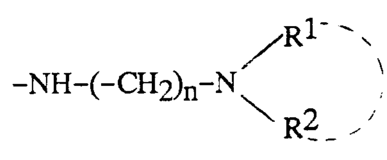 ,

(ii) 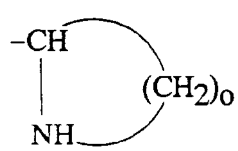 ,

(iii) 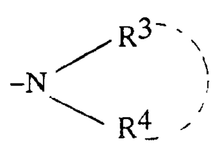 ,

(iv) $-O-R^5$

et

(v) $-NH-R^7$

dans lesquels

$R^1$ et $R^2$ représentent des groupes alkyle identiques ou différents en $C_1$-$C_{10}$ ou forment ensemble et avec l'atome d'azote un hétérocycle à 6 atomes cycliques contenant éventuellement de l'oxygène ou un atome d'azote à substituant alkyle en $C_1$-$C_5$ en tant qu'autre hétéroatome,

$R^3$ et $R^4$ représentent des groupes alkyle identiques ou différents en $C_2$-$C_{10}$ ou forment ensemble et avec l'atome d'azote un hétérocycle à 6 atomes cycliques contenant éventuellement un atome d'oxygène ou un atome d'azote à substituant alkyle en $C_1$-$C_5$ en tant qu'autre hétéroatome,

$R^5$ représente un groupe alkyle à chaîne droite ou ramifiée en $C_2$-$C_{10}$ ou un groupe de formule :

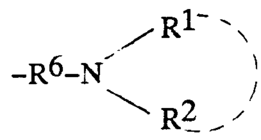

dans laquelle

$R^6$ représente un groupe alkylène à chaîne droite ou ramifiée en $C_2$-$C_8$, et $R^1$ et $R^2$ ont les significations indiquées ci-dessus, et

$R^7$ représente un groupe alkyle en $C_3$-$C_{10}$,

m est un nombre entier allant de 2 à 10,

n est un nombre entier allant de 2 à 5, et

o est un nombre entier allant de 2 à 8,

sous réserve qu'une composition d'agent de démoulage consistant en stéarate de zinc et/ou en isostéarate de zinc et en 3-(2-éthylhexoxy)-propylamine est exclue.

**2.** Mélange approprié à l'utilisation en tant que réactif pour des polyisocyanates organiques, et consistant en :

a) au moins un composé organique contenant au moins deux groupes réactifs avec les groupes isocyanate et ayant un poids moléculaire dans l'intervalle de 400 à 12 000,

b) au moins un composé organique difonctionnel au sens de la réaction d'addition des isocyanates, contenant des atomes d'hydrogène réactifs avec les groupes isocyanate, de poids moléculaire 62 à 399, en quantités de 5 à 50% du poids du composant a),

c) au moins un agent de démoulage, et

le cas échéant

d) d'autres produits auxiliaires et additifs connus en soi, caractérisé en ce que le composant c) consiste en une composition d'agent de démoulage selon la revendication 1, la composition d'agent de démoulage étant présente en quantité telle que, dans le mélange, il y ait de 0,5 à 10 parties en poids de stéarate de zinc pour 100 parties en poids du composant a).

**3.** Mélange selon la revendication 2, caractérisé en ce que :

le composant a) consiste en au moins un polyéther de poids moléculaire 1 800 à 12 000 contenant au total deux ou trois groupes réactifs avec les groupes isocyanate choisis parmi les groupes hydroxy alcooliques primaires, les groupes hydroxy alcooliques secondaires et les groupes amino primaires,

le composant b) consiste en le 1-méthyl-3,5-diéthyl-2,4-diaminobenzène ou en un mélange de cette diamine avec le 1-méthyl-3,5-diéthyl-2,6-diaminobenzène, à une teneur en ce dernier isomère allant jusqu'à 35% en poids, et

le composant c) consiste en une composition d'agent de démoulage selon la revendication 1.

**4.** Procédé pour la fabrication de corps moulés élastiques à couche de surface fermée en élastomères de polyuréthannes ou de polyurées par réaction dans des moules fermés d'un mélange de :

I. un composant polyisocyanate consistant en au moins un di- ou poly-isocyanate à groupe isocyanate à liaisons exclusivement aromatiques, avec

II. un composant réactif contenant des agents de démoulage internes et des composés portant des groupes réactifs avec les groupes isocyanate et, le cas échéant, d'autres produits auxiliaires et additifs,

caractérisé en ce que l'on utilise en tant que composant II. des mélanges selon la revendication 2 ou 3.

**5.** Procédé selon la revendication 4, caractérisé en ce que l'on utilise en tant que composant I. des polyisocyanates ou mélanges de polyisocyanates de la série du diphénylméthane, liquides à température ambiante, contenant le cas échéant des groupes uréthanne et/ou carbodiimide et/ou urétonimine.